(19) **Europäisches Patentamt**

**European Patent Office**

**Office européen des brevets**

(11) **EP 0 659 851 B1**

(12) **EUROPEAN PATENT SPECIFICATION**

(45) Date of publication and mention
of the grant of the patent:
**22.03.2000 Bulletin 2000/12**

(51) Int. Cl.[7]: **C09D 5/46**, C09D 127/16

(21) Application number: **94870203.0**

(22) Date of filing: **21.12.1994**

(54) **High-gloss powder coatings with fluoro resin**

Hochglanzpulverlacke mit Fluorharz

Revêtement à poudre à haute brillance contenant une résine fluorée

(84) Designated Contracting States:
**AT BE CH DE DK ES FR GB GR IE IT LI LU NL PT SE**
Designated Extension States:
**SI**

(30) Priority: **23.12.1993 EP 93870241**

(43) Date of publication of application:
**28.06.1995 Bulletin 1995/26**

(73) Proprietor: **FINA RESEARCH S.A.**
**B-7181 Seneffe (Feluy) (BE)**

(72) Inventors:
- **Verwey, Edwin**
  **NL-2332 ZP Leiden (NL)**
- **Rijkse, Ludwig Karl**
  **NL-2134 EH Hoofddorp (NL)**
- **Gillard, Michel**
  **B-5032 Corroy-le-Chateau (BE)**

(56) References cited:
**EP-A- 0 456 018**      **EP-A- 0 572 764**
**US-A- 5 229 460**

**Description**

The present invention relates to pigmented powder coating products, based on vinylidene fluoride copolymers (hereinafter referred to as VdFC), for preparing high-gloss fluorinated coatings and to a process for coating a substrate with a high-gloss pigmented VdFC powder coating. In particular, the present invention relates to the use of vinylidene fluoride copolymers in pigmented powder coating products, for obtaining high-gloss VdFC-based protective coatings.

Coatings based on vinylidene fluoride homopolymers (hereinafter PVdF) are known to be very useful as protective coatings for a variety of substrates due to the good chemical and weathering resistance and to the thermal stability of PVdF. The general known technique used for preparing them is to prepare a dispersion of PVdF in a suitable solvent for application by known means onto the required substrate which is thereafter subjected to a heat treatment.

The solvent used is generally known in the prior art as "latent solvent", and it is described therein as an organic solvent which has no significant action on PVdF at room temperature but which at an elevated temperature exerts a sufficient solvent action.

However, although the known systems may give good results, environmental protection laws throughout the world, but mainly in Europe and in the U.S.A., are making it increasingly difficult to handle solvent-based systems. Further, the recovery of the solvent is a costly procedure. Accordingly, there is a need in the art for solventless PVdF-based coatings. GB-2194539-A to Labofina discloses pigmented PVdF-based powder coating products essentially consisting of vinylidene fluoride homopolymer (or copolymer with at most 10 wt% of comonomer units), one or more compatible thermoplastic resin and one or more pigments. It also discloses a process for preparing the products. However, the initial gloss obtained is not very high.

EP-456018-A to Elf Atochem North America discloses pigmented powder coatings of vinylidene fluoride/hexafluoropropylene copolymers, the resin component comprising 50-90 wt% of said copolymers having a melt viscosity of 1-4 kPoise [100-400 Pa.s] at 100 $s^{-1}$ and 232°C, said copolymers being characterised by a melting point in the range of about 160°C to about 170°C (which closely approaches the melting point of PVdF), and 50-10 wt% of thermoplastic acrylic resin. The resulting coatings are said to be characterised by improved flexibility, crack resistance and surface smoothness (as opposed to surface roughness or "orange peel" associated with the finish) whilst not requiring the inclusion of a flow-improving agent. No information is reported about the gloss, except that the thermoplastic acrylic resin is responsible for gloss durability. US Patent 5,229,460 to Evodex discloses fluoropolymer-based powder coatings which may be based on PVdF or on a copolymer with at least 80 wt% of vinylidene fluoride and up to 20 wt% of at least one other fluorine-based monomer. No information is reported about the gloss.

The inability of PVdF to produce high-gloss coatings is recognised in the art (see e.g. JOCCA 1990(4), 145).

Attempts to produce high-gloss fluorinated coatings have already been made. US Patent 3,944,689 to PPG discloses solvent-based coating compositions based on vinylidene fluoride copolymers, containing gloss-enhancing solvents as essential to that invention.

The present invention aims at providing pigmented VdFC-based powder coating compositions for preparing high-gloss coatings. High-gloss coatings, as used herein, are coatings having a gloss of more than 40 when measured according to ISO 2813 at an angle of 60°, preferably of more than 50, most preferably of more than 60. Another object of this invention is to provide a process for preparing high-gloss pigmented VdFC-based coatings.

It has surprisingly been found that those compositions, when applied on substrates subject to corrosion, provide improved resistance to corrosion in comparison to similar compositions based on PVdF.

Accordingly the present invention provides a pigmented VdFC-based powder coating product for preparing high-gloss coatings, essentially consisting of

    (i) a resin component essentially consisting of :

        (a) from 60 to 90 wt% of one or more vinylidene fluoride copolymer having a melting temperature below about 150°C and a melt viscosity greater than 400 Pa.s at 100 $sec^{-1}$ and 232°C, but smaller than 1000 Pa.s at 100 $sec^{-1}$ and 232°C,
        (b) from 40 to 10 wt% of one or more compatible resins; and

    (ii) from 1 to 35 parts by weight of one or more pigments per 100 parties by weight of the resin component.

The present invention further provides for the use of vinylidene fluoride copolymers having a melting temperature below about 150°C and a melt viscosity greater than 400 Pa.s at 100 $sec^{-1}$ and 232°C, but smaller than 1000 Pa.s at 100 $sec^{-1}$ and 232°C, in pigmented powder coating products for providing high-gloss protective coatings.

The present invention further provides a process for preparing high-gloss fluorinated coatings, characterised in that it comprises the steps of :

(1) providing a pigmented polyvinylidene fluoride copolymer-based powder composition essentially consisting of

    (i) a resin component essentially consisting of :

        (a) from 60 to 90 wt% of one or more vinylidene fluoride copolymer as described above;
        (b) from 40 to 10 wt% of one or more compatible resins; and

    (ii) from 1 to 35 parts by weight of one or more pigments per 100 parties by weight of the resin component;

(2) applying the powder on a substrate; and
(3) subjecting the coating on the substrate to a heat treatment.

The present invention also provides for the use of vinylidene fluoride copolymers as described above in pigmented powder coating products for application on substrates subject to corrosion.

The vinylidene copolymers used herein are the copolymers prepared from 70 to 99% by weight of vinylidene fluoride (VdF) monomers with 1 to 30% by weight of one or more fluorinated comonomers such as from tetrafluoroethylene (TFE), chlorotrifluoroethylene, vinyl fluoride, hexafluoropropene (HFP), and $CF_3$-$CF_2$-CF=$CF_2$, and having a melting temperature below 150°C and preferably below 140°C. Preferred copolymers are prepared from 75 to 95% by weight of vinylidene fluoride monomer, preferably more than 80 wt% and most preferably more than 90 wt%. Preferred comonomers are TFE and HFP.

In one of the preferred embodiments, VdF/HFP copolymers are used, said copolymers having a melting temperature $T_M$ of about $107 + 68\,e^{-0.141\,x}$ wherein x is the amount of HFP monomer, expressed in % by weight, in the copolymer as calculated by NMR data by the method of Pianca et al. (Polymer $\underline{28}$, 224-30, 1987). Such copolymers are known in the art and need not be described here. They are characterised by a lower melting point for a given content in HFP comonomer. Whilst not wishing to be bound by a theory, it would appear that the high gloss does not result directly from the lower melting temperature because the melt flow index, which reflects the melt viscosity, is essentially independent from the melting temperature. In any case, one skilled in the art would not have expected that a lower melting point would be responsible for a higher gloss : indeed, it is known from US Patent 4,179,542 to Pennwalt that the use of fluxing agents (i.e. high boiling latent solvents for PVdF) lower the observed melting point of PVdF at temperatures above 60°C, while the powder coating compositions disclosed in EP-284996-A to PPG and containing more than 40% of a such agent are not reported to have a high gloss.

In another preferred embodiment, VdF/HFP copolymers are used, said copolymers having polydispersity values $U_z$ lower than 1.0, preferably equal to about 0.9, and $U_n$ lower than 1.7, preferably lower than 1.6, most preferably lower than 1.5. As used herein, $U_z$ is equal to $(M_z/M_w)$-1 and $U_n$ is equal to $(M_w/M_n)$-1, wherein $M_z$ is the z-average molecular weight, $M_n$ the number-average molecular weight and $M_w$ the weight-average molecular weight, all molecular weights being determined by GPC (gel permeation chromatography).

In a third preferred embodiment, the copolymers used have a tensile modulus lower than 800 MPa, preferably lower than 600 MPa, most preferably lower than 400 MPa, when measured according to ASTM D-638.

The copolymers used have a melt viscosity greater than 400 Pa.s measured at 100 sec$^{-1}$ and 232°C using ASTM D3825 test method but smaller than 1000 Pa.s at 100 sec$^{-1}$ and 232°C, preferably greater than about 400 Pa.s at 100 sec$^{-1}$ and 240°C, most preferably greater than about 600 Pa.s at 100 sec$^{-1}$ and 240°C.

Preferred VdFC resins are those having a weight-average molecular weight (as determined by GPC) in the range of from 50 000 to 270 000, most preferably of from 90 000 to 160 000, and a melt flow index (according to ASTM D-1238 at 230°C with a 5 kg weight) of from 5 to 30 g/10 min, most preferably of from 6 to 20 g/10 min.

The VdFC is mixed with one or several compatible resins, preferably of the acrylic type. Acrylic resins are known in the art and need not be described here; a description may e.g. be found in FR-2,636,959-A to Atochem (from line 18 of page 3 to line 14 of page 4). As examples of thermosetting acrylic resin, there may in addition be cited those described in US-4,659,768 to DeSoto, particularly under the denominations "Experimental resin" and "control resin". It has however been found that it is advantageous to use a thermoplastic acrylic resin, and most advantageous to use a thermoplastic polymethylmethacrylate (PMMA) resin which is therefore preferred. As a thermoplastic PMMA resin, there may be used a thermoplastic resin obtained by (co)polymerisation of at least 75 wt% of an alkyl methacrylate, the other comonomers being one or several olefinically unsaturated comonomers, preferably of the alkyl (meth)acrylate type. The esters are formed by the reaction of the acrylic or methacrylic acid with suitable alcohols, for example, methyl alcohol, ethyl alcohol, propyl alcohol, butyl alcohol and 2-ethylhexyl alcohol. Generally, the larger the alcohol portion of the ester, the softer and more flexible the resultant resin. Also, generally, the methacrylic esters form harder films than the corresponding acrylic esters. As examples of such resins, there may be cited polymethylmethacrylate, copolymers of methylmethacrylate with ethyl acrylate, butyl methacrylate, isobutyl methacrylate, acrylic acid or methyacrylic acid, and the like. The most preferred PMMA resins are those which exhibit a viscosity of from 7 to 17 P in 40% solution in a 95:5 by weight mixture of toluene and ethylene glycol methyl ether.

The weight ratio of the VdFC to the compatible resin may vary widely from 90:10 to 60:40, preferably from 75:25 to 65:35, most preferably of about 70:30.

The resin component may additionally contain the usual minor amounts of the usual additives, such as for example an UV absorber, an adhesion promoter, a flow promoter and/or an antioxidant. As suggested in US Patent 5,229,460, an antioxidant may if necessary enhance heat stability and provide protection against thermal degradation and discoloration of the coating film due to excessive heat curing temperatures. Another usual additive is a flow promoting agent; although a flow promoting agent is not essential to the invention, it helps obtaining a high quality of coating surface required in the art. As the flow promoting agent, there are generally used acrylic resins having a relatively low molecular weight (e.g. of about 20,000). The amount of flow promoting agent may vary widely from 0 to 3 wt% based on the total weight of the mixture, but the amount preferably used is of less than about 1 wt% based on the total weight of the coating product. The use of Kynar ADS™ as substitute for a flow promoting agent is known in the art from US Patent 5,229,460.

The use of pigments in the coating composition is preferred. Indeed, if no pigment is used, a clearcoat or varnish can be obtained; however, the resulting coating is unevenly milky, which is undesirable. Further, such clearcoats have a lesser resistance to high temperature, and most important they insufficiently absorb ultraviolet light which will therefore be able to contribute to the degradation of the primer if any. The use of ultrafine titanium dioxide to absorb ultraviolet light is however known in the art.

When pigments are used, there may be used any pigment or combination of pigments. The choice of pigments should preferably be made in accordance with what is known in the art for PVdF-basedcoatings. The amount of pigment used may vary widely, especially according to its hiding power. For example, a white topcoat prepared exclusively with titanium dioxide may require up to about 35 wt% of said pigment. Other pigments with better hiding properties may require lower amounts.

The process for preparing the powder coating product essentially comprises the steps of :

    (i) melt-mixing the VdFC, the compatible resin components and the pigments,
    (ii) forming pellets, and
    (iii) grinding the pellets.

Melt-mixing is normally carried out by extrusion. Extruding and granulating the resulting mixture can be made by the usual procedures. The operating procedure is easily determined by one skilled in that art. In particular, there may be used a single or double screw extruder. The processing temperature is usually of from 150°C to 190°C. The dimensions of the pellets are not critical parameters; they are usually of about 3 mm diameter and 2 mm length.

Grinding the pellets may be done by any suitable means which allows suitable particles to be obtained. Techniques for grinding are known to those skilled in the art and need not be described further. US Patent 5,229,460 contains a discussion of the state of the art of grinding fluoropolymer-based thermoplastic blends and the influence of the cooling step thereon.

The powder should comprise particles of size and shape suitable for achieving constant flow through the application equipment, mainly in order to obtain a constant thickness of the coating. It is preferred that the shape of the particles be as spherical as possible and their size as uniform as possible, because the resulting powder has better flowing properties. Regarding the size of the particles, the grinding step is associated with a sieving step for eliminating the largest size particles, i.e. those particles exceeding about three times the desired thickness of the coating. On the other hand, excessively small particles are to be avoided, because they are a hazard for health and because they tend to block the transport lines during application.

It is preferred to use a hammer mill wherein a rotating shaft carries hammers which break the pellets on fixed shapes in the casing of the hammer mill and hammer them through a sieving lining at the bottom of the hammer mill. Sieve openings of about 0.2 mm have been found particularly appropriate.

The resulting powder may be applied on the substrate by any means suitable for achieving an even distribution of the particles. In particular, there may be used any electrostatic spray application apparatus, whereby the charged particles are sprayed onto the oppositely charged substrate. Alternative techniques are cloud chamber, fluidised bed, and even triboelectric coating, and the like. Such techniques are well known in the art and need not be described further.

The VdFC-based powder is preferably applied over a suitable primer coating, e.g. as known in the art as primers for similar fluorinated coatings.

After the coating has been applied to the substrate, it must be subjected to a heat treatment. The coated substrate is passed into a heated oven wherein the coating is finally baked, preferably at a temperature of from 150 to 220°C, preferably of from 160 to 190°C. The temperature used in this step should be higher than the melting point of the powder, which melting point is easily determined experimentally e.g. with an oven having a temperature gradient.

On the other hand, excessively high temperatures have a yellowing effect on the finished coating. The duration of the heating step is determined by any suitable method which is known in the art, taking into account that an insufficient duration is detrimental to the surface hardness and to the gloss. One of the advantageous results of this invention is that high gloss can be obtained without the need to bake at relatively high temperatures, contrary to the expectations of those skilled in the art.

Finally, the coating and its substrate can be either slowly cooled in air or quenched in water.

It is surprising that high-gloss coatings can be obtained from VdFC-based powder coatings, in view of the prejudice known from US Patent 3,944,689 which disclosed that gloss-enhancing solvents are essential.

It has also surprisingly been observed that the resulting coatings have better mechanical properties.

In order to further illustrate the invention, the following examples are given which are intended not to limit the scope of the invention.

Example 1 and Comparative example A

The following powder coating composition was prepared :

| - fluorinated polymer | 64.8 parts by weight (pbw) |
|---|---|
| - acrylic polymer | 27.9 pbw |
| - flow improver | 0.7 pbw |
| - pigments | 6.6 pbw |
| | 100.0 |

The mixture of pigments was selected to yield a red colour corresponding to RAL 3004; it consisted of 5.1 pbw of Bayferrox™ 130BM (iron oxide), 1.0 pbw of Quindo™ Violet RV 6951 (organic pigment) and 0.5 pbw of Kronos™ 2160 (titanium dioxide).

The flow improver was a low molecular weight copolymer of 30 wt% of ethyl acrylate monomer and 70 wt% of 2-ethylhexyl acrylate monomer, having a viscosity of about 1.06 Pa.s at 98.9°C.

The acrylic polymer was a commercially available thermoplastic copolymer of 70 wt% methyl methacrylate monomer and 30 wt% of ethyl acrylate monomer, having a viscosity of about 12 P in 40% solution in a 95:5 by weight mixture of toluene and ethylene glycol methyl ether.

In example 1, the fluorinated polymer was a copolymer of vinylidene fluoride and hexafluoropropene having the following characteristics :

-    VDF/HFP molar ratio : 93:7 (NMR determination according to Pianca et al., Polymer 28, 224, 1987)
-    melt flow index: 8.5g/10 min (ASTM D-1238; 230°C, 2.16 kg)
-    melt viscosity: 850 Pa.s (ASTM D-3835; 240°C, 100 s$^{-1}$)
-    molecular weight (GPC) :

| $M_n$ = 49,000 | $M_w$ = 112,000 | $M_z$ = 217,000 |
|---|---|---|

-    tensile properties (ASTM D-638 M on a 2mm thick pressed sheet) :

| - tensile stress at yield | 16 MPa |
|---|---|
| - ultimate tensile strength | 34 MPa |
| - elongation at yield | 14 % |
| - elongation at break | 650 % |

(continued)

| - modulus | 360 MPa |
|-----------|---------|

- flexural properties (ASTM D-790 on a 4 mm thick pressed sheet) :

| - maximum load | 30 MPa |
|----------------|---------|
| - modulus | 380 MPa |

- DSC measurements (ASTM D-3418) :

| - melting point | 134 °C |
|-----------------|--------|
| - fusion heat | 23 J/g |
| - crystallisation point | 97 °C |
| - crystallisation heat | 25 J/g |

- brittleness temperature (ASTM D-746 A) : -23°C

In comparative example A, the fluorinated polymer was a vinylidene fluoride homopolymer commercially available from ATOCHEM NORTH AMERICA under the tradename KYNAR 710.

The resulting mixtures were extruded under the following conditions, giving pellets of 3 mm diameter and about 2 mm length :

- twin screw extruder
- screw rotation : 200 rpm
- load : 85%
- temperature profile : 165°C at hopper exit, rising to 190°C in the middle of the screw, then 180°C up to the end of the screw
- temperature of the material at the exit : 180°C.

The pellets were cooled in liquid nitrogen down to about -150°C, then grinded at a temperature of about -100°C in a hammer mill and sieved to eliminate particles larger than about 150 μm. In the hammer mill, a rotation shaft carries hammers which break the pellets on fixed shapes in the casing of the hammer mill and hammer them through a sieving lining at the bottom of the hammer mill. The particle size distribution was measured: 99% of the particles had a size below 90 μm, and 40% below 32 μm. Only 5% had a size below 15 μm.

The resulting powder was applied by an electrostatic spray process on a 1 mm thick chromated aluminium plate previously covered by a 50 μm layer of an epoxy primer. The epoxy primer had been prepared and applied according to example 1 of EP-404752-A to the Applicants.

The coated substrate was then heated 9 minutes at 220°C (object temperature), giving a 50 μm thick top coating.

Gloss measurements were made at an angle of 60° according to ISO 2813 :

- example 1 : 60
- comparative example A : 31

Additional measurements were made with the coating of example 1:

| | Example 1 | Comp.ex.A | |
|---|---|---|---|
| - direct impact resistance | > 150 kg.cm | 40 kg.cm | ASTM D-2794 |
| - reverse impact resistance | > 150 kg.cm | 25 kg.cm | ASTM D-2794 |
| - adherence | GTO | GTO | ISO 2409 |
| - Flexibility (conical mandrel) | 0 mm | 2 mm | ISO 6860 |
| - Flexibility (Erichsen) | > 10 mm | 6 mm | ISO 1510 |
| - Gloss retention after 2000 h AWOM | 75.2% | 90% | ASTM G-26 |
| - Gloss retention after 5000 h QUV$_B$ | 88.7% | 88% | ECCA-T10 |
| - acid salt spray (2000 h) | no defect | no defect | ASTM B-287 |
| - Kesternich 20 cycles (2 l SO$_2$) | no defect | no defect | DIN 5018 |
| - filiform corrosion (1000 h) | 0-3 mm | 0-2mm | DIN 65472 |

Example 2 and comparative example B

Example 1 and comparative example A were repeated, except that the following white powder composition was prepared (RAL 9010)

| | |
|---|---|
| - fluorinated polymer | 54.9 pbw |
| - acrylic polymer | 23.3 pbw |
| - flow improver | 0.7 pbw |
| - titanium dioxide | 21.1 pbw |
| | 100.0 |

Gloss measurements were made according to ISO 2813 :

| | Example 2 | Comp. Ex. B |
|---|---|---|
| at an angle of 60° | 62 | 38 |

Additional measurements were made with the coating of example 2 :

| | | |
|---|---|---|
| - direct impact resistance | 140 kg.cm | ASTM D-2794 |
| - reverse impact resistance | > 150 kg.cm | ASTM D-2794 |
| - adherence | GTO | ISO 2409 |
| - Flexibility (conical mandrel) | 0 mm | ISO 6860 |
| - Flexibility (Erichsen) | > 10 mm | ISO 1510 |
| - Gloss retention after 2000 h AWOM | 88.8% | ASTM G-26 |
| - Gloss retention after 5000 h QUV$_B$ | 109% | ECCA-T10 |

(continued)

| - acid salt spray (2000 h) | no defect | ASTM B-287 |
|---|---|---|
| - Kesternich 20 cycles (2 l $SO_2$) | no defect | DIN 50018 |
| - Hoek van Holland testsite (1 year) | 117% gloss retention | ECCA T19 |

Examples 3 and 4, and comparative examples C and D

Example 2 was repeated, except that vinylidene fluoride-hexafluoroproprene copolymers were used that had the following characteristics (determined as mentioned in example 1) :

| | | Ex.2 | Ex.3 | Ex.4 | Comp.C | Comp.D | Units |
|---|---|---|---|---|---|---|---|
| - VDF/HFP molar ratio : | | 93:7 | 93:7 | 95:5 | 96:4 | 96:4 | |
| - melt flow index : | | 8.5 | 2.2 | 2.2 | 8.5 | 2.2 | g/10 min |
| - molecular weights | $M_n$ | 49 | 56 | 65 | 42 | 51 | x 1000 |
| | $M_w$ | 112 | 134 | 135 | 113 | 143 | x 1000 |
| | $M_z$ | 217 | 251 | 245 | 227 | 336 | x 1000 |
| - tensile properties | | | | | | | |
| - tensile stress at yield | | 16 | 16 | 26 | 31 | 31 | MPa |
| - ultimate tensile strength | | 34 | 45 | 43 | 24 | 33 | MPa |
| - elongation at yield | | 14 | | | 10 | 10 | % |
| - elongation at break | | 650 | 700 | 480 | 400 | 400 | % |
| - modulus | | 360 | 350 | 750 | 1000 | 1000 | MPa |
| - flexural properties | | | | | | | |
| - maximum load | | 30 | | | 49 | 40 | MPa |
| - modulus | | 380 | | | 970 | 1000 | MPa |
| - DSC measurements | | | | | | | |
| - melting point | | 134 | 131 | 146 | 160 | 160 | °C |
| - fusion heat | | 23 | 23 | 40 | 38 | 38 | J/g |
| - crystallisation point | | 97 | 93 | 101 | 119 | 119 | °C |
| - crystallisation heat | | 25 | 24 | 34 | 35 | 35 | J/g |
| - brittleness temperature | | -23 | | | -15 | -17 | °C |
| - coating properties : | | | | | | | |
| - gloss (ISO 2813, 60°) | | 62 | 70.8 | 48.4 | 37.6 | 28.6 | |

A few other properties were measured and found to be identical for examples 3 and 4, and comparative examples C and D :

| - direct impact (ASTM D-2794) | 100 kg.cm |
|---|---|
| - reverse impact (ASTM D-2794) | > 100 kg.cm |

(continued)

| | |
|---|---|
| - adherence (ISO 2409) | GTO |
| - conical mandrel (ISO 6860 ASTM D-552) | 0 mm |

Example 5

Example 1 was repeated except that the following composition was prepared :

| | |
|---|---|
| - fluorinated polymer | 62.2 pbw |
| - acrylic polymer | 26.5 pbw |
| - flow improver | 0.8 pbw |
| - pigments | 10.5 pbw |

and that the fluorinated polymer and pigments used were as follows.

The fluorinated polymer was a commercially available copolymer of vinylidene fluoride and tetrafluoroethylene having the following characteristics as shown on the technical datasheet :

| | |
|---|---|
| - melting point | 122 - 126°C (ASTM D-3418) |
| - fusion heat | 12.5 - 20.9 J/g (ASTM D-3417) |

-   tensile properties (ASTM D-638 and D-1708 at 25°C) :

| | |
|---|---|
| - tensile stress at yield | 14.5 - 18.6 MPa |
| - ultimate tensile strength | 32.4 - 44.8 MPa |
| - elongation at break | 500 - 800 % |
| - modulus | 414 - 552 MPa |

The mixture of pigments was selected to yield a brown colour; it consisted of 1.9 pbw of Flammruss™ 101 (carbon black), 2.5 pbw of Sheperd™ brown 49 (organic pigment), 3.4 pbw of Bayferrox™ 180 (iron oxide) and 2.7 pbw of Tipaque™ TY200 (chromium titanate).

The gloss was measured according to ISO 2813 at an angle of 60°; a value of 56 was observed.

Examples 6 and 7 and comparative examples E and F

The following white powder coating composition was prepared :

| | |
|---|---|
| - fluorinated polymer | 54.9 pbw |
| - acrylic polymer | 23.3 pbw |
| - flow improver | 0.7 pbw |
| - titanium dioxide | 21.1 pbw |

(continued)

| | |
|---|---|
| | 100.0 |

The fluorinated polymer, the acrylic polymer and the flow improver were as in examples 1 and 5 (respectively for examples 6 and 7) and in comparative example A (for comparative examples E and F). The powders were prepared as described for the same.

In example 6 and comparative example E, the resulting powders were applied by an electrostatic spray process on both sides of a 1 mm thick Sendzimir steel plate having a 25 μm thick zinc layer, covered by a 50 μm layer of an epoxy primer. The epoxy primer had been prepared and applied according to example 1 of EP-404752-A to the Applicants.

In example 7 and comparative example F, the powder coatings were applied on both sides of a 1 mm thick thermally galvanised steel plates having a 40 μm thick zinc layer, covered by a 50 μm layer of the epoxy primer described hereabove.

In examples 6 and 7, the coated substrates were then heated 15 minutes at 200°C (air temperature), giving 80 μm thick top coatings.

In comparative examples E and F, the coated substrates were then heated 15 minutes at 230°C (air temperature), giving 80 μm thick top coatings.

The coatings obtained show a good resistance to corrosion. That property is determined in the art by the ASTM-B-117 (salt spray) test method, using panels coated on both sides evaluated according to ASTM D-714 (blister formation) : the panels, previously notched with two crossed lines, are subjected during 1000 h to a salt spray (50 g/l NaCl) at a temperature of 35°C. The following results were obtained :

| | Example 6 | Example 7 | Comp.ex.E | Comp.ex.F | |
|---|---|---|---|---|---|
| - 60° gloss | 62 | 60 | 38 | 38 | ISO 2813 |
| - salt spray | no defect | no defect | 7-12 mm | 3-8 mm | ASTM B-117 |

Example 8

Example 2 was repeated using an experimental VDF-copolymer sold under the name Kymar RC 10062 by Elf-Atochem and having following characteristics :

| VDF-HFP ratio (NMR) | 94:6 |
|---|---|
| Melting point | 142-145°C |
| Gloss of the white coating | 65 |

Comparative examples G, H and I

Example 2 was repeated, except that vinylidene fluoride-hexafluoropropene copolymers that had the following characteristics were used :

| | METHOD | COMP EX. G | COMP EX. H | COMP EX. I | UNITS |
|---|---|---|---|---|---|
| VDF/HFP molar ratio | NMR determination according to Pianca et al. Polymer 28, 224, 1987 | 96:4 | 98:2 | 95:5 | |
| Specific gravity | ASTM D792 | 1.76-1.78 | 1.76-1.78 | 1.76-1.80 | - |
| Melt viscosity | ASTM D3835 (232°C, 100 s$^{-1}$) | 2300-2700 | 2300-2700 | 1300-1700 | Pa.s |
| Melt flow rate | ASTM D1238 (230°C, 5.0kg) | - | - | 2.5-6.5 | g/10 min |
| | ASTM D1238 (230°C, 12.5kg) | 3-7 | 3-7 | - | g/10 min |
| Melting temperature | ASTM D3418 | 140-145 | 155-160 | 140-145 | °C |
| Tensile properties | ASTM D638 | | | | |
| tensile yield strength | | 20-27 | 34 | 20-24 | MPa |
| tensile break strength | | 24-41 | 39 | 37-45 | MPa |
| break elongation | | 400-600 | 400 | 400-700 | % |
| tensile modulus | | 483-620 | 793 | - | MPa |
| Flexural modulus | ASTM D790 | 620-827 | 1158 | 655-793 | MPa |
| Coating Properties | | | | | |
| Gloss | ISO 2813 (60° angle) | 6.6 | 38.1 | 12.4 | |

Visually, the coatings obtained from these copolymers were glossy but because of a very bad flow the recording of this property according to the ISO method yield low values.

The quantification of the flow at 220°C of VDF-copolymers was attempted according to a method developed for phenolic resins (DIN 16916 part 2) :

| Copolymer of example | 1 | 41.7 mm |
|---|---|---|
| | 8 | 12.8 mm |
| | 9 | 15.0 mm |
| | 10 | 14.8 mm |

**Claims**

1.  Powder coating composition for preparing high-gloss coatings, essentially consisting of :

    (i) a resin component essentially consisting of :

        (a) from 60 to 90 wt% of one or more vinylidene fluoride copolymers having a melting temperature below 150°C and a melt viscosity greater than 400 Pa. s at 100 sec$^{-1}$ and 232°C (ASTM D3825), but smaller than 1000 Pa. s at 100 sec$^{-1}$ and 232°C ;
        (b) from 40 to 10 wt% of one ore more compatible resins ; and

    (ii) from 1 to 35 parts by weight of one or more pigments per 100 parts by weight of the resin component.

**2.** Composition for preparing high-gloss coatings according to claim 1, wherein the copolymers are prepared with 75 to 95 wt% of vinylidene fluoride monomer, with 25 to 5 wt% of one ore more comonomer selected from tetrafluoroethylene and hexafluoropropene.

**3.** Composition for preparing high-gloss coatings according to either of claims 1 and 2, wherein the copolymers have a tensile modulus lower than 800 MPa, preferably lower than 600 MPa.

**4.** Composition for preparing high-gloss coatings according to either of claims 1 and 2, wherein the copolymers have a melt viscosity greater than about 600 Pa. s at 100 $sec^{-1}$ and 240°C.

**5.** Composition for preparing high-gloss coatings according to either of claims 1 and 2, wherein the copolymers are copolymers with hexafluoropropene and have polydispersity values $U_z$ lower than 1.0, preferably equal to about 0.9, and $U_n$ lower than 1.7, preferably lower than 1.6.

**6.** Composition for preparing high-gloss coatings according to either of claims 1 and 2, wherein the copolymers are copolymers with hexafluoropropene and have a melting temperature $T_M$ of about $107+68\ e^{-0.141\ x}$, wherein x is the weight percentage of hexafluoropropene in the copolymer as calculated from NMR data by the method of Pianca et al.

**7.** Composition for preparing high-gloss coatings according to any one of claim 1 to 6, wherein the compatible resin is thermoplastic polymethylmethacrylate.

**8.** Composition for preparing high-gloss coatings according to any one of claims 1 to 7, wherein the weight ratio of copolymers to resin is of about 70:30.

**9.** Use of vinylidene fluoride copolymers as defined in claim 1 in pigmented powder coating compositions for providing high-gloss coatings.

**10.** Use according to claim 9, wherein the compositions essentially consist of the compositions according to any one of claims 1 to 8.

**Patentansprüche**

**1.** Pulverüberzugszusammensetzung zum Herstellen von Hochglanzüberzügen, im wesentlichen bestehend aus:

(i) einer Harzkomponente, im wesentlichen bestehend aus:

(a) 60 bis 90 Gew.% eines oder mehrerer Vinylidenfluoridcopolmere mit einer Schmelztemperatur unterhalb von 150°C und einer Schmelzviskosität größer als 400 Pa.s bei 100 $sec^{-1}$ und 232°C (ASTM D 3825), aber kleiner als 1000 Pa.s bei 100 $sec^{-1}$ und 232°C,
(b) 40 bis 10 Gew.% eines oder mehrerer kompatibler Harze und

(ii) 1 bis 35 Gewichtsteilen eines oder mehrerer Pigmente pro 100 Gewichtsteile der Harzkomponente.

**2.** Zusammensetzung zum Herstellen von Hochglanzüberzügen nach Anspruch 1, wobei die Copolymeren mit 75 bis 95 Gew.% Vinylidenfluoridmonomer, mit 25 bis 5 Gew.% eines oder mehrerer Comonomerer, ausgewählt aus Tetrafluorethylen und Hexafluorpropen, hergestellt sind.

**3.** Zusammensetzung zum Herstellen von Hochglanzüberzügen nach einem der Ansprüche 1 oder 2, wobei die Copolymeren einen Zugmodul von weniger als 800 MPa, vorzugsweise weniger als 600 MPa, haben.

**4.** Zusammensetzung zum Herstellen von Hochglanzüberzügen nach entweder Anspruch 1 oder 2, wobei die Copolymeren eine Schmelzviskosität größer als etwa 600 Pa.s bei 100 $sec^{-1}$ und 240°C haben.

**5.** Zusammensetzung zum Herstellen von Hochglanzüberzügen nach entweder Anspruch 1 oder 2, wobei die Copolymeren Copolymere mit Hexafluorpropen sind und Polydispersitätswerte $U_z$ niedriger als 1,0, vorzugsweise gleich etwa 0,9, und $U_n$ niedriger als 1,7, vorzugsweise niedriger als 1,6, haben.

**6.** Zusammensetzung zum Herstellen von Hochglanzüberzügen nach entweder Anspruch 1 oder 2, wobei die Copolymeren Copolymere mit Hexafluorpropen sind und eine Schmelztemperatur $T_m$ von etwa $107+68\ e^{-0,141\ x}$ haben, wobei x der Gewichtsprozentsatz von Hexafluorpropen in dem Copolymeren ist, wie aus NMR Daten mithilfe des Verfahrens von Pianca et al. berechnet.

**7.** Zusammensetzung zum Herstellen von Hochglanzüberzügen nach einem der Ansprüche 1 bis 6, wobei das kompatible Harz thermoplastisches Polymethylmethacrylat ist.

**8.** Zusammensetzung zum Herstellen von Hochglanzüberzügen nach einem der Ansprüche 1 bis 7, wobei das Gewichtsverhältnis von Copolymeren zu Harz etwa 70:30 ist.

**9.** Verwendung von Vinylidenfluoridcopolymeren, wie in Anspruch 1 definiert, in pigmentierten Pulverüberzugszusammensetzungen zum zur Verfügung stellen von Hochglanzüberzügen.

**10.** Verwendung nach Anspruch 9, wobei die Zusammensetzungen im wesentlichen aus den Zusammensetzungen nach einem der Ansprüche 1 bis 8 bestehen.


**Revendications**

**1.** Composition de revêtement en poudre pour préparer des revêtements à haute brillance, consistant essentiellement en:

(i) un composant de résine consistant essentiellement en:

(a) de 60 à 90% en poids d'un ou plus de copolymères de fluorure de vinylidène ayant une température de fusion inférieure à 150°C et une viscosité à fusion supérieure à 400 Pa.s à 100 sec$^{-1}$ et 232°C:(ASTM D3825), mais inférieure à 1000 Pa.s à 100 sec$^{-1}$ et 232°C;
(b) de 40 à 10% en poids d'une ou plusieurs résines compatibles; et

(ii) de 1 à 35 parties d'un ou plusieurs pigments par 100 parties en poids de composant de résine.

**2.** Composition pour préparer des revêtements à haute brillance selon la revendication 1 dans laquelle les copolymères sont préparés avec 75 à 95% en poids de monomère de fluorure de vinylidène, avec 25 à 5% en poids d'un ou plusieurs comonomères choisis parmi le tétrafluoréthylène et l'hexafluoropropène.

**3.** Composition pour préparer des revêtements à haute brillance selon l'une quelconque des revendications 1 et 2, dans laquelle les copolymères ont un module en traction inférieur à 800 MPa, de préférence inférieur à 600 MPa.

**4.** Composition pour préparer des revêtements à haute brillance selon l'une quelconque des revendications 1 et 2, dans laquelle les copolymères ont une viscosité à fusion supérieure à 600 Pa.s à 100 sec$^{-1}$ et 240°C.

**5.** Composition pour préparer des revêtements à haute brillance selon l'une quelconque des revendications 1 et 2, dans laquelle les copolymères sont des copolymères avec de l'hexafluoropropène et ont des indices de polydispersité $U_z$ inférieurs à 1,0, de préférence égaux à environ 0,9, et $U_n$ inférieurs à 1,7, de préférence inférieurs à 1,6.

**6.** Composition pour préparer des revêtements à haute brillance selon l'une quelconque des revendications 1 et 2, dans laquelle les copolymères sont des copolymères avec de l'hexafluoropropène et ont une température de fusion TM d'environ $107 +68\ e^{-0.141x}$, où x est le pourcentage en poids d'hexafluoropropène dans le copolymère calculé à partir des données RMN selon la méthode de Pianca et col.

**7.** Composition pour préparer des revêtements à haute brillance selon l'une quelconque des revendications 1 à 6, dans laquelle la résine compatible est le polyméthylméthacrylate thermoplastique.

**8.** Composition pour préparer des revêtements à haute brillance selon l'une quelconque des revendications 1 à 7, dans laquelle le rapport pondéral de copolymères à résine est d'environ 70:30.

**9.** Utilisation de copolymères de fluorure de vinylidène tels que définis dans la revendication 1 dans des compositions pour revêtements en poudre pigmentés pour réaliser des revêtements à haute brillance.

**10.** Utilisation selon la revendication 9 dans laquelle les compositions consistent essentiellement en compositions selon l'une quelconque des revendications 1 à 8.